Europäisches Patentamt

European Patent Office

Office européen des brevets

(19)

(11) Veröffentlichungsnummer: **0 339 129 B1**

# EUROPÄISCHE PATENTSCHRIFT

(12)

(45) Veröffentlichungstag der Patentschrift: **08.01.92**

(21) Anmeldenummer: **88117820.6**

(22) Anmeldetag: **19.04.88**

(51) Int. Cl.⁵: **A23G 1/18, A23G 3/02**

(60) Veröffentlichungsnummer der früheren Anmeldung nach Art. 76 EPÜ: **0 289 849**

(54) **Temperiermaschine für kakaobutterhaltige und ähnliche fetthaltige Massen, insbesondere Schokolademassen.**

(43) Veröffentlichungstag der Anmeldung:
**02.11.89 Patentblatt 89/44**

(45) Bekanntmachung des Hinweises auf die
Patenterteilung:
**08.01.92 Patentblatt 92/02**

(84) Benannte Vertragsstaaten:
**DE FR GB IT**

(56) Entgegenhaltungen:
EP-A- 0 129 884      DE-A- 2 536 063
FR-A- 953 603        FR-A- 1 155 456
US-A- 1 971 314      US-A- 4 648 315

(73) Patentinhaber: **Sollich GmbH & Co. KG**
**Siemensstrasse 17 - 23**
**W-4902 Bad Salzuflen(DE)**

(72) Erfinder: **Sollich, Helmut**
**Karschau 54**
**W-2341 Rabenkirchen(DE)**

(74) Vertreter: **Rehberg, Elmar, Dipl.-Ing.**
**Postfach 3162 Am Kirschberge 22**
**W-3400 Göttingen(DE)**

EP 0 339 129 B1

# Beschreibung

Die Erfindung bezieht sich auf eine Temperiermaschine für kakaobutterhaltige und ähnliche fetthaltige Massen, insbesondere Schokolademassen, mit mindestens einer Massekammern und Misch- und Rührelemente darin aufweisenden Kühlstufe, in welcher die Masse durch Wärmeaustausch an Wärmeaustauschflächen der Kühlstufe vermittels eines an einen Kühlkreislauf angeschlossenen Kühlmediums gekühlt und anschließend in eine Nachwärmstufe überführt wird, in welcher die Masse durch Wärmeaustausch an Wärmeaustauschflächen der Nachwärmstufe vermittels eines an einen Temperierkreislauf angeschlossenen Temperiermediums wieder erwärmt wird.

Eine solche Temperiermaschine ist aus der DE-PS 25 36 063 bekannt. Die dort vorgesehene Kühlstufe weist übereinander angeordnete und an den Kühlkreislauf angeschlossene Kühletagen mit gekühlten Decken- und Bodenflächen auf. In den Massekammern der Kühlstufe sind Schaber als Misch- und Rührelemente vorgesehen. An die Kühlstufe schließt sich eine Nachwärmstufe an, die einen Raum umschließt, durch den die Masse geleitet wird. Die Zylindermantelfläche dieses Raums ist als Wärmeaustauschfläche der Nachwärmstufe ausgebildet und an einen Temperierkreislauf mit Temperiermedium angeschlossen. Die Wärmeaustauschfläche der Nachwärmstufe ist wesentlich kleiner ausgebildet als die Wärmeaustauschfläche der Kühlstufe, so daß etwa 10 % der gesamten Wärmeaustauschfläche in der Nachwärmstufe untergebracht sind. In der Massekammer der Nachwärmstufe sind keine Misch- und Rührelemente vorgesehen. Diese Massekammer dient vielmehr der Homogenisierung und dem Verweilen der Masse, die mit vorgebildeten Kristallen versehen ist. Dabei findet eine geringe Temperaturerhöhung der Masse statt. Die Verweilzeit in dieser Massekammer der Nachwärmstufe ist so bemessen, daß die niedrig schmelzenden, instabilen Kristalle Zeit und Gelegenheit zum Ausschmelzen und Umwandeln in höherschmelzende Kristallformen haben. Die Temperatur des Temperiermediums des Temperierkreislaufs wird hier geregelt, und zwar in Abhängigkeit von der Austrittstemperatur der Masse an der Nachwärmstufe, die über einen dort angeordneten Temperaturfühler gemessen wird. Bei diesem Regelvorgang ergeben sich erhebliche Temperatursprünge in der Temperatur des Temperiermediums des Temperierkreislaufs, die sich nicht immer günstig auf die Kristallformen der Masse der Nachwärmstufe auswirken. Eine örtlich zu hohe Temperatur führt nicht nur zu einem Ausschmelzen der instabilen, sondern auch der stabilen Beta-Kristalle, was in nachteiliger Weise dazu führt, daß die Masse, beispielsweise mit einer Überziehanlage auf Riegelware aufgebracht, längere Erstarrungszeiten bis zur Erreichung des festen Zustands erfordert und/oder die Erstarrung der verarbeiteten Masse erst bei vergleichsweise niedrigeren Temperaturen eintritt. Damit sind dann weitere bekannte Nachteile wie Temperaturempfindlichkeit, geringe Lagerbeständigkeit, Gefahr der Grauschleierbildung sowie weicher Bruch der Ware verbunden. Um diesen Nachteilen teilweise entgegenzuwirken, ist es bekannt, die Austrittstemperatur der Masse aus der Nachwärmstufe vergleichsweise niedrig zu wählen, also mit vergleichsweise niedrigen Temperaturen des Temperiermediums im Temperierkreislauf zu arbeiten. Damit aber wird die Verarbeitbarkeit der Masse nach der Temperiermaschine schlechter, was ebenfalls unerwünscht ist. Der Anteil instabiler Kristalle bleibt vergleichsweise hoch.

Sämtliche bisher bekannten Temperiermaschinen, die eine Kühlstufe und eine Nachwärmstufe aufweisen, dienen dazu, eine vergleichsweise warme Masse zunächst abzukühlen und dann in der Nachwärmstufe wiederum gezielt zu erwärmen. Dabei ist der Ausbildung der Kühlstufe besondere Bedeutung geschenkt, was sich darin äußert, daß für die Kühlstufe ein vergleichsweise größerer Platz und eine aufwendigere Ausbildung im einzelnen, verglichen mit der Nachwärmstufe, zur Verfügung gestellt wird. So sind die Wärmeaustauschflächen in der Kühlstufe teilweise erheblich größer ausgebildet, auf jeden Fall aber größer als die Wärmeaustauschflächen in der Nachwärmstufe. Oft sind in den Massekammern der Kühlstufe zusätzliche Rühr-und Mischelemente vorgesehen, während die Nachwärmstufe im wesentlichen nur eine geschlossene Massekammer besitzt. Es können auch mehrere Massekammern in der Nachwärmstufe vorgesehen sein, in denen Rühr- und Mischwerkzeuge vorgesehen sind. Oft verlangt es auch die Weiterverarbeitung der Masse, eine nicht zu hohe Endtemperatur der Masse zu erreichen. Aus diesem Grund bietet es sich an, die Nachwärmstufe konstruktiv kleiner auszubilden als die Kühlstufe. Hieraus hat sich auf dem Gebiet dieser Temperiermaschinen der Typ Maschinen eingebürgert und weit verbreitet, bei welchem die Nachwärmstufe erheblich kleiner als die Kühlstufe ausgebildet ist. Oft werden beim Kühlen auch eine vergleichsweise große Anzahl instabiler Kristalle gebildet, die bei nachfolgendem Erwärmen in vergleichsweise hohe Temperaturen wieder ausschmelzen.Dabei werden in der Regel aber nicht genügend stabile Kristalle in der Kühlstufe gebildet, wie sie für ein schnelles und ordnungsgemäßes Erstarren der Schokolademasse nach ihrer Verarbeitung erforderlich sind. Der verbleibende Anteil an stabilen Kristallen ist zu gering, um die Masse korrekt mit der nötigen Schnelligkeit erstarren zu lassen. Würde man versuchen, eine solche Masse nach ihrer Verarbeitung durch sehr starke Kühlung - niedrige Temperaturen und hohe Luftgeschwindigkeit - doch schnell zu verfestigen, würden sich hierdurch wiederum sehr viele instabile Kristalle bilden. Das Ergebnis wäre glanzlose und weichschmierige Schokolade. Aus all diesen Gesichtspunkten wird die Wärmeaustauschfläche der Nachwärmstufe üblicherweise erheblich kleiner gewählt als die Wärmeaustauschfläche in der Kühlstufe.

Kakaomasse kann bekanntlich nicht direkt aus dem warmen Zustand heraus verarbeitet werden, weil die darin enthaltene Kakaobutter sehr träge in er Bildung von Erstarrungskeimen ist. Die Erstarrung würde deshalb viel zu lange dauern. Durch das Vorkristallisieren, welches in einer Temperiermaschine stattfindet, wird die Erstarrungszeit wesentlich reduziert.

Kakaobutter ist außerdem polymorph, d. h. sie kann in verschiedenen Kristallformen erstarren, von welchen nur die hochschmelzende Beta-Form stabil ist. Nur diese stabile Kristallform ergibt guten Glanz, lange Lagerbeständigkeit und gute Ausformbarkeit durch Kontraktion.

Desweiteren ist Kakaobutter monotrop, d. h. die verschiedenen Kristallformen können sich selbsttätig umwandeln, jedoch nur in einer Richtung, nämlich von den niedrig zu den höherschmelzenden Kristallformen. Durch Kristallumwandlung in einem Schokoladen-Fertigprodukt wird Energie frei, die zu Fettreif an der Produktoberfläche führen kann.

Kakobutter neigt dazu, bei der Endkühlung, also der Erstarrung am Schokoladen-Fertigprodukt, in der gleichen Kristallform zu erstarren wie die Kristallform der Impfkristalle. Dabei muß jedoch die Wachstumsgeschwindigkeit der Kristalle beachtet werden, d. h. die Kühlung darf bis zum Erstarren der Masse nicht zu schroff sein. Eine Temperiermaschine dient ganz allgemein zum Vorkristallisieren, um also in der noch flüssigen Masse einen bestimmten Anteil des in der Masse enthaltenen Fetts bereits zum Erstarren zu bringen, und zwar in der hochschmelzenden, stabilen Beta-Kristallform, wobei kleine Kristallagglomerate in großer Anzahl und homogen in der Masse verteilt als ideal anzusehen sind.

Aus der FR-A-1 155 456 ist eine Temperiermaschine für Schokolademassen bekannt, die eine Kühlstufe und eine Nachwärmstufe aufweist. In jeder dieser beiden Stufen werden die Wärmeaustauschflächen von einer Vielzahl von Röhrchen gebildet, die zwischen zwei Platten dichtend angeordnet sind. Die durch die Röhrchen gebildeten Massekammern werden durch eine Durchbrechung in einer eingangsseitig vorgesehenen Drehscheibe freigegeben. Die Massekammern sind frei von Misch- und Rührelementen und werden von der Schokolademasse diskontinuierlich durchströmt. Der Nachwärmstufe ist eine Homogenisierungskammer nachgeschaltet, in der ein Misch- und Rührelement umläuft. Bedingt durch die komplizierte Bauart der Kühl- und der Nachwärmstufe sind die beiden Stufen identisch gestaltet, so daß die Wärmeaustauschflächen in beiden Stufen gleich groß gestaltet sind. Da die Schokolademasse in jeweiligen Teilmengen für eine Umdrehung der Drehscheibe und in der Nachwärmstufe mit dem Kühlmedium bzw. dem Temperiermedium umströmt werden, ändern sich die örtlichen Temperaturen an der Wärmeaustauschfläche fortwährend und die Massetemperatur in den einzelnen Teilmengen schwankt entsprechend. Die Temperatur der Masse am Eingang in die Kühlstufe kann beispielsweise 45°C am Eingang in die Nachwärmstufe 29°C und am Auslaß 31°C betragen. Über die Anordnung mehrerer Kühlstufen, wie sie für Temperiermaschinen mit kontinuierlich durchströmten Massekammern typisch sind, und deren Flächenverhältnis zu der Nachwärmstufe ist nichts ausgeführt.

Der Erfindung liegt die Aufgabe zugrunde, eine Temperiermaschine der eingangs beschriebenen Art so weiterzubilden, daß die aufbereitete Masse am Ausgang der Temperiermaschine vorwiegend stabile Betakristalle enthält, deren Anzahl in der Nachwärmstufe nicht reduziert worden ist. In der Nachwärmstufe soll darüber hinaus eine kleine Temperaturdifferenz Anwendung finden, wobei genügend Zeit gegeben sein muß, damit die instabilen Kristallformen ausschmelzen können.

Erfindungsgemäß wird dies dadurch erreicht, daß zur Erreichung einer konstant geregelten Temperatur der Wärmeaustauschfläche der Nachwärmstufe diese Wärmeaustauschfläche der Nachwärmstufe etwa so groß, oder gleich groß wie die Wärmeaustauschfläche der Kühlstufe gestaltet ist. Damit ist also die Wärmeaustauschfläche der Kühlstufe etwa genauso groß gestaltet wie die Wärmeaustauschfläche der Nachwärmstufe, d. h. die Nachwärmstufe mit ihren Einzelteilen nimmt raummäßig und bedeutungsmäßig einen etwa gleich großen Platz ein wie die Kühlstufe. Damit wird die Nachwärmstufe erheblich größer und intensiver gestaltet als dies bisher im Stand der Technik bekannt war. Bei dieser Temperiermaschine wird nicht die Ausgangstemperatur der temperierten Masse an der Nachwärmstufe konstant gehalten, sondern die Temperatur des Temperiermedium bzw. die Temperatur der Wärmeaustauschfläche der Nachwärmstufe. Diese konstant gehaltene Temperatur liegt etwa zwischen 31,5°C und 33°C, also höher als die Schmelztemperatur der instabilen Kristalle und niedriger als die Schmelztemperatur der stabilen Betakristalle. Je nach der Durchsatzleistung, für die die Temperiermaschine bestimmt und ausgelegt ist, kann das Verhältnis der Wärmeaustauschflächen der Nachwärmstufe zu den Wärmeaustauschflächen der Kühlstufe etwas unterschiedlich sein. Eine gleich große oder fast gleich große Gestaltung ist in allen Fällen sinnvoll.

Einer der wesentlichen Vorteile der neuen Temperiermaschine ist darin zu sehen, daß die aufbereitete Masse am Ausgang der Nachwärmstufe eine Temperatur in der Größenordnung von 31,5° C bis 32,5° C aufweist, die also etwa 2° C höher liegt als dies bei den bisher üblichen Temperiermaschinen der Fall war. Dies erbringt eine geringere Masse-Viskosität, d. h. die aufbereitete Masse ist dünnflüssiger und kann somit besser verarbeitet werden. Es findet eine Masseeinsparung beim Überziehen von Gegenständen, wie beispielsweise Pralinen, Keks und Riegel statt. Trotz der erhöhten Temperatur erstarrt die Masse schneller infolge des hohen Anteils stabiler Betakristalle. Die Masse erbringt an der Ware eine bessere Lagerbeständigkeit, insbesondere Wärmebeständigkeit, verbunden mit einer geringen Anfälligkeit gegen Auftreten eines Grauschleiers. Es wird eine hervorragende Schrumpfung erzielt, die für Entformungsvorgänge wichtig ist. Die Masse besitzt in der erstarrten Form einen hervorragenden Glanz und erbringt einen knackigen Bruch, wie es allgemein angestrebt wird.

Während bisher bei Temperiermaschinen am Ausgang der Nachwärmstufe ein Temperaturfühler in der Masse vorgesehen war, um abhängig von diesem Temperaturfühler eine Regelung der Temperatur des Temperiermediums durchzuführen, ist dies bei der vorliegenden Erfindung nicht mehr der Fall. Es wird umgekehrt die Temperatur des Temperiermediums mit einem Temperaturfühler abgegriffen und die Temperatur des Temperiermediums mit einem Temperaturregler konstant geregelt. Durch die vergleichsweise große Wärmeaustauschfläche der Nachwärmstufe nimmt dann die temperierte Masse eine bestimmte Temperatur am Ende der Nachwärmstufe an. Die absolute Höhe dieser Temperatur ist nicht mehr so wichtig. Wichtig ist vielmehr, daß große Flächen in der Nachwärmstufe zur Verfügung stehen und kleine Temperaturunterschiede zur Einwirkung gebracht werden, damit die in der Masse enthaltenen stabilen Betakristalle nicht geschädigt und andererseits die instabilen Kristallformen aufgeschmolzen werden. Für ein qualitativ hochwertiges Endprodukt, auf welchem die Masse ihren Niederschlag findet, ist in aller Regel der Anteil der stabilen Betakristalle am Ende der Nachwärmstufe maßgeblich. Es ist also auf der Seite des Temperiermediums der Nachwärmstufe ein Temperaturfühler vorgesehen, um die Temperatur des Temperiermediums und damit die Temperatur in der Wärmeaustauschfläche der Nachwärmstufe konstant zu halten.

Der Temperierkreislauf der Nachwärmstufe ist zur Erreichung eines turbulenten Strömungszustandes ausgebildet, wobei in den Massekammern der Nachwärmstufe angetriebene Misch- und Rührelemente zur intensiven Durchmischung und Verwirbelung der Masse vorgesehen sind. Durch Anwendung einer turbulenten Strömung auf der Seite des Temperiermediums in der Nachwärmstufe wird ein hervorragender Wärmeübergang erreicht, und zwar auch bei kleinen Temperaturdifferenzen. Durch die in der Masse erzeugte Turbulenz wird ein so starkes Kristallwachstum erreicht, daß die Masse bei Verlassen der Kühlstufe zwar auch noch instabile Kristalle enthält, aber zusätzlich genügend stabile Kristalle (4 - 5 %), so daß nach Verlassen einer ausreichend dimensionierten Nachwärmstufe keine oder nur wenige instabile Kristalle in der Masse verbleiben. Die intensive Durchmischung und Verwirbelung der Masse erbringt auch eine homogene Verteilung des hohen Anteils an stabilen Betakristallen. Die nach der Verarbeitung folgende Abkühlung der temperierten Masse verläuft sogar schneller als bisher, weil die höherschmelzenden stabilen Kristalle schneller erstarren als die niedrigschmelzenden.

Auch in der Kühlstufe kann der Kühlkreislauf zur Erreichung eines turbulenten Strömungszustandes ausgebildet sein. Wenngleich auch in der Kühlstufe wesentlich größere Temperaturdifferenzen zur Einwirkung gebracht werden ist auch damit eine intensive Nutzung der Wärmeaustauschflächen aufgezeigt, so daß das Gesamtbauvolumen der Temperiermaschine entsprechend klein gestaltet werden kann und jedenfalls nicht größer ausfällt als bisher üblich.

Die Kühlstufe und die Nachwärmstufe können ansich gleich oder sogar identisch ausgebildet sein. Auch in den Massekammern der Kühlstufe und in den Massekammern der Nachwärmstufe können ähnlich oder gleich ausgebildete Misch- und Rührelemente vorgesehen sein. Wichtig ist lediglich, daß zwei getrennte Kreisläufe vorgesehen sind, nämlich ein Kühlkreislauf und ein Temperierkreislauf.

Die Erfindung wird anhand eines bevorzugten Ausführungsbeispiels weiter verdeutlicht und beschrieben. Es zeigen:

Figur 1 eine schematische Darstellung wesentlicher Teile der Temperiermaschine mit dem Kühlkreislauf und dem Temperierkreislauf und

Figur 2 ein Diagramm der Temperaturen über der Zeit und durch die Temperiermaschine gemäß Figur 1.

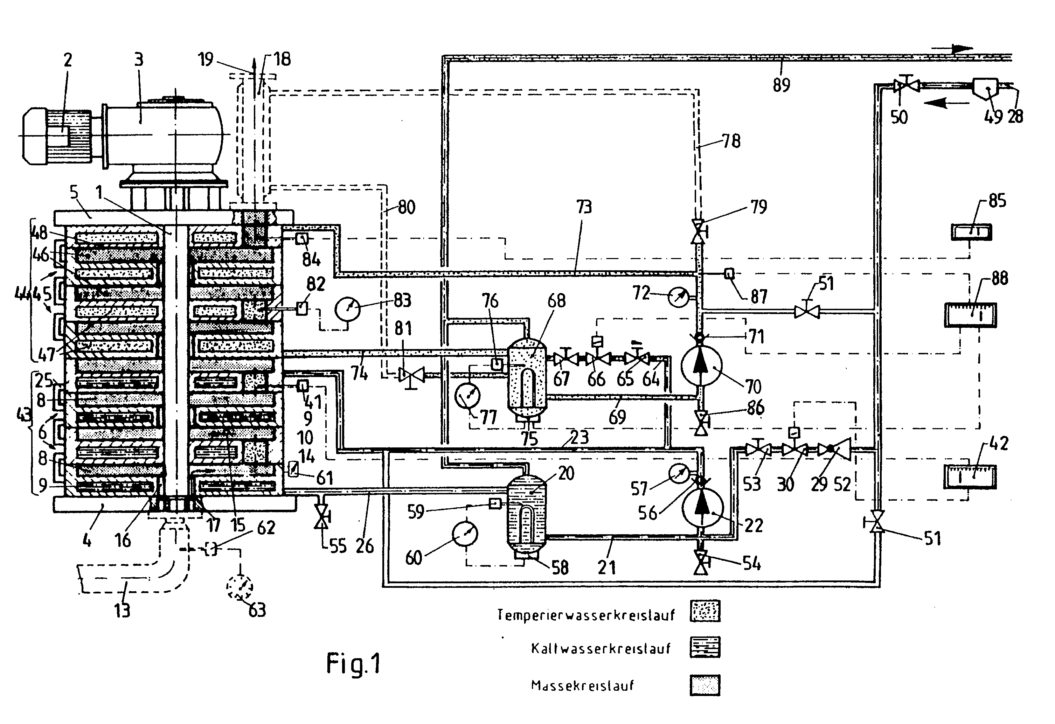

Die in Figur 1 dargestellte Vorrichtung ist an sich prinzipiell ähnlich aufgebaut wie die Vorrichtung gemäß Figur 1 der europäischen Anmeldung EP-A-289 849, auf die insbesondere hinsichtlich der Ausbildung der Misch- und Rührelemente verwiesen wird, die aus Gründen der Übersichtlichkeit vorliegend nicht nochmals dargestellt sind. Im unteren Bereich ist eine Antriebswelle 1 auch hier von Kühletagen 6 umgeben, die insgesamt eine Kühlstufe 43 bilden, während im oberen Bereich eine Nachwärmstufe 44 vorgesehen ist. Eine Vorratskammer 7 im Anschluß an die Nachwärmstufe 44 kann zusätzlich vorgesehen sein, ist aber in den meisten Fällen nicht erforderlich. Die Nachwärmstufe 44 weist Wärmeetagen 45 auf, die sich prinzipiell von den Kühletagen 6 nicht in ihrem Aufbau, sondern nur in ihrer Betriebsweise dadurch unterscheiden, daß im Bereich der Kühlstufe 43 die Masse abgekühlt wird, während sie im Bereich der Nachwärmstufe 44 wieder gezielt erwärmt wird. In jeder Wärmeetage 45 ist eine Massekammer 46 gebildet, wobei auch hier Durchlaßöffnungen 14 und 16 innen bzw. außen angeordnet sind. Der konstruktive Aufbau der Wärmeetagen 45 unterscheidet sich von den Kühletagen 6 nicht. So weisen auch die Wärmeetagen 45 Wärmekammern 47 und Wärmeaustauschflächen 48 auf, an denen die Masse erwärmt wird. Die Rührwerkzeuge sind der Übersichtlichkeit halber nicht dargestellt. Die Rührwerkzeuge werden in den Massekammern 46 kontinuierlich angetrieben. Die aufzubereitende Masse wird mittels einer nicht dargestellten Pumpe über eine Leitung 13 und die hier innen liegende Durchlaßöffnung 16 der untersten Massekammer 8 zugeführt, wo sie durch die Rührwerkzeuge verwirbelt wird und auf einen größeren Durchmesser gelangt, so daß sie durch die außenliegende Durchlaßöffnung 14 in die nächste Kammer eintreten kann. Auf diese Art und Weise durchwandert die Masse, gefördert von der nicht dargestellten Pumpe, sämtliche Massekammern 8 der Kühlstufe 43 und gelangt im Anschluß daran in die unterste Massekammer 46 der Nachwärmstufe 44. Die Masse wird dann wieder erwärmt.

Die verschiedenen Kreisläufe sind wie folgt ausgebildet und angeordnet: über eine Leitung 28, in der ein Schmutzfilter 49 und ein Handabsperrventil 50 vorgesehen sind, gelangt Frischwasser zu einem Füllventil 51, so daß damit der Kühlkreislauf der Kühlstufe 43 befüllt werden kann. Dieser Kühlkreislauf weist einen Mischbehälter 20 auf, von dem eine Leitung 21 zu einer Pumpe 22 führt, von der eine Leitung 23 zu der obersten Etage 6 der Kühlstufe 43 führt, und zwar in eine dort vorgesehene Kühlkammer 9. Über eine Leitung 26 gelangt das Kühlwasser aus der untersten Kühlkammer 9 zurück zum Mischbehälter 20. In einer von der Leitung 28 zu der Leitung 21 führenden Leitung 52 ist eine Regelventil 29, welches als Druckminderventil ausgebildet sein kann, ein Magnetventil 30 sowie ein Handabsperrventil 53 angeordnet, so daß über diese Leitung 52 Kühlwasser aus dem Vorlauf dem Kreislauf bei Bedarf hinzugefügt werden kann, um die Temperatur des umlaufenden Wassers in der Kühlstufe 43 zu erniedrigen. Es sind Wasserablaßventile 54 und 55 dieses ersten Kreislaufs vorgesehen. Hinter der Pumpe 22 kann ein Rückschlagventil 56 und ein Manometer 57 vorgesehen sein. Der Mischbehälter 20 ist mit einer Heizeinrichtung 58 versehen, die von einem Temperaturfühler 59 über ein Kontaktthermometer 60 betrieben werden kann und insbesondere für die Nachtheizung bestimmt ist, also zu Zeiten, in denen die Schokolademasse in der Vorrichtung lediglich flüssig gehalten wird, jedoch eine Produktion nicht stattfindet. Über einen Temperaturfühler 41, der die Temperatur der Masse am Ende der Kühlstufe 43 mißt, wird die Temperatur in dem Kühlkreislauf über den Temperaturregler 42 geregelt bzw. gesteuert, und zwar derart, daß die Menge des umlaufenden Wasser immer konstant gehalten wird und lediglich eine geringfügige Temperaturregelung stattfindet, um die gewünschte und festgelegte niedrige Temperatur am Ende der Kühlstufe 43 in der Massse zu erhalten. Über den Temperaturregler 42 wird das Magnetventil 30 bestätigt.

Im Bereich der Kühlstufe 43 kann ein Sicherheitsdruckschalter 61 vorgesehen sein. Die Leitung 13, in der die warme Masse zugeführt wird, kann mit einem Temperaturfühler 62 und mit einer Anzeige 63 für die Masseeingangstemperatur versehen sein.

Der zweite Kreislauf, der als Temperierkreislauf bezeichnet wird, ist an sich grundsätzlich ähnlich aufgebaut wie der erste Kreislauf, nur findet hier innerhalb der Nachwärmstufe 44 eine Erwärmung der Masse statt. In einer von der Leitung 23 abzweigenden Leitung 64 ist ein Durchflußmengenregulierventil 65, ein Magnetventil 66 und ein Handabsperrventil 67 vorgesehen, so daß auf diese Art und Weise warmes Wasser aus dem Kühlkreislauf in einen Mischbehälter 68 des Temperierkreislaufs gelangen kann. Von dort führt eine Leitung 69 zu einer Pumpe 70 und über ein Rückschlagventil 71 und ein Manometer 72 in einer Leitung 73 zu der obersten Wärmekammer 47 der Nachwärmstufe 44. Auch hier wird das Temperiermedium Warmwasser im Gegenstrom durch die Wärmeetagen 45 hindurchgeführt und gelangt über eine Leitung 74 zurück zum Mischbehälter 68. Im Mischbehälter 68 ist eine Heizeinrichtung 75 vorgesehen, die über einen Temperaturfühler 76 und ein Kontaktthermometer 77 zum Zwecke der Nachtheizung betrieben werden kann. Von der Leitung 73 zweigt eine Leitung 78 ab, in der ein Handabsperrventil 79 vorgesehen ist. Die Leitung 78 führt zu einem Masseauslaß 18, dessen Leitungsbestandteile hierüber beheizt bzw. auf Temperatur gehalten werden können, damit die temperierte Masse entsprechend Pfeil 19 auf dem Transport zur Verarbeitungsstelle nicht ihre günstige. Masseausgangstemperatur verliert. In einer Rückleitung 80 ist ein Handabsperrventil 81 vorgesehen. Ein Temperaturfühler 82 und ein Sicherheitsthermometer 83 gestatten wir Überwachung der Massetemperatur an der betreffenden Stelle der Nachwärmstufe 44. Weiterhin ist ein Temperaturfühler 84 zur Messung der Masseausgangstemperatur vorgesehen, der mit einer Anzeigeeinrichtung 85 verbunden ist, um die Masseausgangstemperatur anzuzeigen. In diesem Wärmekreislauf ist weiterhin ein Wasserablaßventil 86 angeordnet. Ein Temperaturfühler 87 ist in der Leitung 73 angeordnet und mit einem Temperaturregler 88 verbunden, der andererseits das Magnetventil 66 steuert. Über einen Kühlwasserrücklauf 89 wird überschüssiges Wasser sowohl aus dem Temperierkreislauf wie auch aus dem Kühlkreislauf abgeführt.

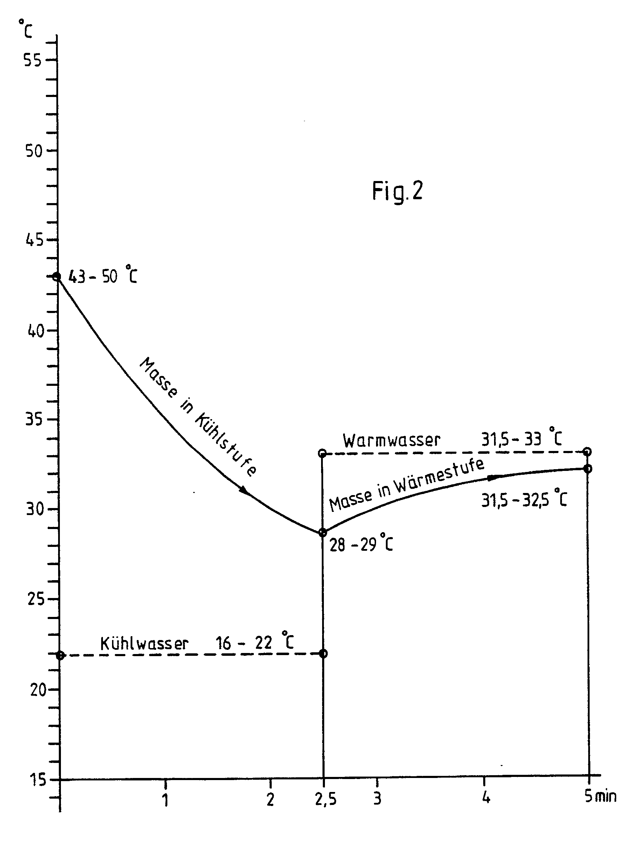

In Figur 2 sind die Temperaturverläufe an der Temperiermaschine gemäß Figur 1 dargestellt, wobei die Kühlstufe 43 etwa genau so groß gestaltet ist wie die Nachwärmstufe 44, also aus einer übereinstimmenden Anzahl von Kühletagen 6 und Wärmeetagen 45 gebildet sind. Die Verweildauer in der Kühlstufe 43 möge 2,5 min betragen, so daß auch die Verweildauer in der der Nachwärmstufe 44 2,5 min beträgt. Die zu behandelnde Masse möge über die Leitung 13 mit einer Temperatur von etwa 43° C bis 50° C der untersten Kühletage 6 zugeführt werden. Die Temperatur des Kühlwassers im Kühlkreislauf liegt in der Größenordnung von 16° C bis 22° C und ist hier lediglich schematisch für den Bereich der Kühlstufe 43 angegeben. Da das Kühlwasser im Gegenstrom geführt wird, wird die dargestellte waagerechte Linie tatsächlich etwas ansteigend verlaufen, wobei durch die von der Masse aufgenommene Wärme vielleicht eine Erwärmung des Kühlwassers in der Größenordnung von 0,5° C stattfindet. Wesentlich ist, daß die im Umlauf betriebene Kühlwassermenge sehr groß ist, um die Turbulenz in den Kühlkammern9 zu erreichen. Die Temperatur im Kühlkreislauf wird in Abhängigkeit von der erreichten Massetemperatur am Ende der Kühlstufe 43 über den Temperaturfühler 41 gemessen und mit dem Temperaturregler 42 über das Magnetventil 30 ausgeregelt. Am Ende der Kühlstufe 43 weist die Masse eine Temperatur von 28° C bis 29° C auf und tritt mit dieser Temperatur in die Nachwärmstufe 44 ein. Hier wird Warmwasser mit einer Temperatur von etwa 31,5° C bis 33° C im Kreislauf geführt, wobei auch dies im Gegenstromverfahren erfolgt. Das erforderliche warme Wasser wird aus dem Kühlkreislauf entnommen und über die Heizeinrichtung 75 entsprechend aufgeheizt. Dieses warme Wasser verringert seine Temperatur beim Durchlauf durch die Wärmekammern 46, so daß es wieder aufgeheizt werden muß. Die Schokolade wird in der Nachwärmstufe 44 erwärmt, uns zwar auf eine Masseausgangstemperatur in der Größenordnung zwischen 31,5° C und 32,5° C. Diese Masseausgangstemperatur liegt um etwa 2° C höher als es bisher bekannt war, woraus die verbesserten Weiterverarbeitungseigenschaften resultieren.

**Bezugszeichenliste:**

| 1  | = Antriebswelle |
|----|----|
| 6  | = Kühletage |
| 8  | = Massekammer |
| 9  | = Kühlkammer |
| 13 | = Leitung |
| 14 | = Durchlaßöffnung |
| 16 | = Durchlaßöffnung |
| 18 | = Masseauslaß |
| 19 | = Pfeil |
| 20 | = Mischbehälter |
| 21 | = Leitung |
| 22 | = Pumpe |
| 23 | = Leitung |
| 26 | = Leitung |
| 28 | = Leitung |
| 29 | = Regelventil |
| 30 | = Magnetventil |
| 41 | = Temperaturfühler |
| 42 | = Temperaturregler |
| 43 | = Kühlstufe |
| 44 | = Nachwärmstufe |
| 45 | = Wärmeetage |
| 46 | = Massekammer |
| 47 | = Wärmekammer |
| 48 | = Wärmeaustauschfläche |
| 49 | = Schmutzfilter |
| 50 | = Handabsperrventil |
| 51 | = Füllventil |
| 52 | = Leitung |
| 53 | = Handabsperrventil |
| 54 | = Wasserablaßventil |
| 55 | = Wasserablaßventil |
| 56 | = Rückschlagventil |
| 57 | = Manometer |
| 58 | = Heizeinrichtung |
| 59 | = Temperaturfühler |
| 60 | = Kontaktthermometer |
| 61 | = Sicherheits-Druckschalter |
| 62 | = Temperaturfühler |
| 63 | = Anzeige |
| 64 | = Leitung |
| 65 | = Durchflußmengen-Regulierventil |
| 66 | = Magnetventil |
| 67 | = Handabsperrventil |
| 68 | = Mischbehälter |
| 69 | = Leitung |
| 70 | = Pumpe |
| 71 | = Rückschlagventil |
| 72 | = Manometer |
| 73 | = Leitung |
| 74 | = Leitung |

75 = Heizeinrichtung
76 = Temperaturfühler
77 = Kontaktthermometer
78 = Leitung
79 = Handabsperrventil
80 = Rückleitung
81 = Handabsperrventil
82 = Temperaturfühler
83 = Sicherheitsthermometer
84 = Temperaturfühler
85 = Anzeigeeinrichtung
86 = Wasserablaßventil
87 = Temperaturfühler
88 = Temperaturregler
89 = Kühlwasserrücklauf

**Patentansprüche**

1. Temperiermaschine für kakaobutterhaltige und ähnliche fetthaltige Massen, insbesondere Schokolademassen mit mindestens einer Massekammern und Misch- und Rührelemente darin aufweisenden Kühlstufe, in welcher die Masse durch Wärmeaustausch an Wärmeaustauschflächen der Kühlstufe vermittels eines an einen Kühlkreislauf angeschlossenen Kühlmediums gekühlt und anschließend in einer Nachwärmstufe (44) überführt wird, in welcher die Masse durch Wärmeaustausch an Wärmeaustauschflächen (48) der Nachwärmstufe (44) vermittels eines an einen Temperierkreislauf angeschlossenen Temperiermediums wieder erwärmt wird, dadurch gekennzeichnet, daß zur Erreichung einer konstanten geregelten Temperatur der Wärmeaustauschfläche (48) der Nachwärmstufe (44) die Wärmeaustauschfläche (48) der Nachwärmstufe etwa so groß, oder gleich groß, wie die Wärmeaustauschfläche der Kühlstufe (43) gestaltet ist.

2. Temperiermaschine nach Anspruch 1, dadurch gekennzeichnet, daß auf der Seite des Temperiermediums der Nachwärmstufe (44) ein Temperaturfühler (87) vorgesehen ist, um die Temperatur des Temperiermediums und damit die Temperatur in der Wärmeaustauschfläche (48) der Nachwärmstufe (44) konstant zu halten.

3. Temperiermaschine nach Anspruch 1 oder 2, dadurch gekennzeichnet, daß der Temperierkreislauf der Nachwärmstufe (44) zur Erreichung eines turbulenten Strömungszustandes ausgebildet ist und das in den Massekammern (46) der Nachwärmstufe (44) angetriebene Misch- und Rührelemente zur intensiven Durchmischung und Verwirbelung der Masse vorgesehen sind.

4. Temperiermaschine nach Anspruch 3, dadurch gekennzeichnet, daß auch in der Kühlstufe (43) der Kühlkreislauf zur Erreichung eines turbulenten Strömungszustandes ausgebildet ist.

5. Temperiermaschine nach Anspruch 3 und 4, dadurch gekennzeichnet, daß in den Massekammern (8) der Kühlstufe (43) und in den Masserkammern (46) der Nachwärmstufe (44) ähnlich oder gleich ausgebildete Misch- und Rührelemente vorgesehen sind.

6. Temperiermaschine nach Anspruch 5, dadurch gekennzeichnet, daß die Massekammern (8) der Kühlstufe (43) und die Massekammern (46) der Nachwärmstufe (44) gleiche Durchtrittsflächen und auch ansonsten gleiche geometrische Bedingungen aufweisen, so daß sich gleiche Verweilzeiten für die Masse ergeben.

**Claims**

1. Tempering machine for masses containing cocoa butter or similar ones containing fat, in particular chocolate masses, with at least one cooling stage, which displays mass chambers and mixing and stirring elements therein and in which the mass is cooled through heat exchange at heat exchange surfaces of the cooling stage by means of a cooling medium connected to a cooling circuit and is subsequently transferred into a reheating stage (44), in which the mass is heated up again through heat exchange at heat exchange surfaces (48) of the reheating stage (44) by means of a tempering medium connected to a tempering circuit, characterised thereby, that for the achievement of a constant regulated temperature of the heat exchange surface (48) of the reheating stage (44), the heat exchange surface (48) of the reheating stage is structured to be about as large or equally large as the heat exchange surface of the cooling stage (43).

2. Tempering machine according to claim 1, characterised thereby, that a temperature sensor (87) is provided on the side of the tempering medium of the reheating stage (44) in order to keep the temperature of the tempering medium and thereby the temperature in the heat exchange surface (48) of the reheating stage (44) constant.

3. Tempering machine according to claim 1 or 2, characterised thereby, that the tempering circuit of the reheating stage (44) is constructed for the achievement of a turbulent state of flow and that driven mixing and stirring elements for the intensive intermixing and turbulence of the mass are provided in the mass chambers (46) of the reheating stage (44).

4. Tempering machine according to claim 3, characterised thereby, that the cooling circuit also in the cooling stage (43) is constructed for the achievement of a turbulent state of flow.

5. Tempering machine according to claim 3 and 4, characterised thereby, that similarly or identically constructed mixing and stirring elements are provided in the mass chambers (8) of the cooling stage (43) and in the mass chambers (46) of the reheating stage (44).

6. Tempering machine according to claim 5, characterised thereby, that the mass chambers (8) of the cooling stage (43) and the mass chambers (46) of the reheating stage (44) display equal passage areas and also otherwise equal geometric conditions so that equal dwell times result for the mass.

**Revendications**

1. Machine adoucisseuse pour des masses contenant du beurre de cacao et autres masses analogues contenant des graisses, en particulier des masses de chocolat, avec au moins un étage refroidisseur présentant des chambres de masse et des éléments mélangeurs et agitateurs dans celles-ci, dans laquelle la masse est refroidie par échange de chaleur à travers des surfaces d'échange de chaleur de l'étage refroidisseur, au moyen d'un agent refroidissant raccordé à un circuit de refroidissement, la masse étant ensuite transférée dans un étage réchauffeur (44) où elle est réchauffée par échange de chaleur à travers des surfaces d'échange de chaleur (48) de l'étage réchauffeur (44), au moyen d'un agent adoucisseur raccordé à un circuit d'adoucissement,

   **caractérisée** en ce que, pour obtenir une température régulée constante de la surface d'échange de chaleur (48) de l'étage réchauffeur (44), cette surface d'échange de chaleur (48) de l'étage réchauffeur est d'une grandeur égale ou sensiblement égale à celle de la surface d'échange de chaleur de l'étage refroidisseur (43).

2. Machine adoucisseuse selon la revendication 1, caractérisée en ce qu'il est prévu sur le côté de l'agent adoucisseur de l'étage réchauffeur (44) un capteur de température (87) pour maintenir constante la température de l'agent adoucisseur et par suite la température dans la surface d'échange de chaleur (48) de l'étage réchauffeur (44).

3. Machine adoucisseuse selon la revendication 1 ou 2, caractérisée en ce que le circuit d'adoucissement de l'étage réchauffeur (44) est agencé pour obtenir un régime d'écoulement turbulent, et en ce que sont prévus dans les chambres de masse (46) de l'étage réchauffeur des éléments entraînés, mélangeurs et agitateurs, pour un mélange intensif et un tourbillonnement de la masse.

4. Machine adoucisseuse selon la revendication 3, caractérisée en ce que, également dans l'étage refroidisseur (43), le circuit de refroidissement est agencé pour obtenir un régime d'écoulement turbulent.

5. Machine adoucisseuse selon les revendications 3 et 4, caractérisée en ce que sont prévus dans les chambres de masse (8) de l'étage refroidisseur (43) et dans les chambres de masse (46) de l'étage réchauffeur des éléments mélangeurs et agitateurs similaires ou de même conformation.

6. Machine adoucisseuse selon la revendication 5, caractérisée en ce que les chambres de masse (8) de l'étage refroidisseur (43) et les chambres de masse (46) de l'étage réchauffeur (44) présentent des surfaces de passage égales et présentent aussi en outre des conditions géométriques semblables, de telle sorte qu'il en résulte des temps de séjour égaux pour la masse.

Fig.1

Temperierwasserkreislauf

Kaltwasserkreislauf

Massekreislauf

Fig.2